# EUROPÄISCHE PATENTANMELDUNG

(11) **EP 3 581 463 A1**
(43) Veröffentlichungstag der Anmeldung: **18.12.2019**
(21) Anmeldenummer: 19178910.6
(22) Anmeldetag: 07.06.2019
(51) Int. Cl.: B62B 7/10, B62B 7/14

(54) **RAHMEN EINES KINDERWAGENS**

(30) Priorität: 11.06.2018 DE 102018113876
(71) Anmelder: Emmaljunga Barnvagnsfabrik AB, 28268 Vittsjö (SE)
(72) Erfinder: Schack, Tobias, 30249 Halmstad (SE); Olsson, Tommy, 28268 Vittsjö (SE); Edvardsson, Joakim, 28143 Hässleholm (SE); Persson, Christian, 28268 Vittsjö (SE)
(74) Vertreter: Müller Schupfner & Partner Patent- und Rechtsanwaltspartnerschaft mbB

(57) **Zusammenfassung**

Rahmen zum Einsatz an einem Kinderwagen, umfassend einen Basisbereich (2) und zumindest drei Aufnahmeeinheiten (4, 5, 6), wobei am Basisbereich (2) zumindest ein Wagenrad (8) drehbar um eine Rotationsachse (R) festlegbar ist, wobei die Aufnahmeeinheiten (4, 5, 6) mittelbar oder unmittelbar am Basisbereich (2) festgelegt sind und jeweils einen Schwenkteil (4A, 5A, 6A) aufweisen, welcher relativ zum Basisbereich (2) schwenkbar ist und in eine erste Stellung (S1) oder in eine zweite Stellung (S2) bringbar ist, wobei die Aufnahmeeinheiten (4, 5, 6) in einer ersten Stellung (S1) vom Basisbereich (2) aus in vertikaler Richtung nach oben ragen, wobei die Aufnahmeeinheiten (4, 5, 6) an ihrem in der ersten Stellung (S1) vom Basisbereich (2) abgewandten, distalen Ende jeweils zumindest einen Halteabschnitt (4C, 5C, 6C) zur Festlegung zumindest einer Transporteinheit (10) aufweisen.

## Beschreibung

Die vorliegende Erfindung betrifft einen Rahmen für einen Kinderwagen.

Rahmen für Kinderwagen sind aus dem Stand der Technik bereits bekannt, insbesondere wenn es darum geht, mehrere Transporteinheiten wie Babyschalen, Sportsitzaufsätze, Transportkörbe für Einkäufe oder ähnliche Einheiten an einem Rahmen für einen Kinderwagen festzulegen, hat es sich im Stand der Technik gezeigt, dass die hierfür erforderlichen konstruktiven Lösungen zumeist sehr sperrig, nur mit vielen Handgriffen zerlegbar und zusammenfaltbar sind und erreichen nicht die erforderlichen Stabilitätswerte für einen Rahmen zur Aufnahme einer Vielzahl von Transporteinheiten.

Aufgabe der vorliegenden Erfindung ist es, einen Rahmen für einen Kinderwagen bereitzustellen, welcher mit besonders wenigen Handgriffen zusammenfaltbar ist, die Festlegung von zumindest zwei Transporteinheiten erlaubt und dabei mit einer möglichst geringen Anzahl an Einzelteilen auskommt. Weiterhin ist es Aufgabe der vorliegenden Erfindung einen Rahmen bereitzustellen, welcher besonders stabil ist und bei dem eine besonders gute Raumausnutzung, insbesondere bei geringer Spurbreite des Kinderwagens erreicht werden kann.

Diese Aufgabe wird gelöst mit einem Rahmen gemäß Anspruch 1, weitere Vorteile und Merkmale der Erfindung ergeben sich aus den abhängigen Ansprüchen.

Erfindungsgemäß umfasst der Rahmen einen Basisbereich und zumindest drei Aufnahmeeinheiten, wobei am Basisbereich zumindest ein Wagenrad drehbar um eine Rotationsachse festlegbar ist, wobei die Aufnahmeeinheiten mittelbar oder unmittelbar am Basisbereich festgelegt sind und jeweils einen Schwenkteil aufweisen, welcher relativ zum Basisbereich schwenkbar ist und in eine erste Stellung oder in eine zweite Stellung bringbar ist, wobei die Aufnahmeeinheiten in einer ersten Stellung vom Basisbereich aus in vertikaler Richtung nach oben ragen, wobei die Aufnahmeeinheiten in ihrem in der ersten Stellung vom Basisbereich abgewandten distalen Ende jeweils zumindest einen Halteabschnitt zur Festlegung zumindest einer Transporteinheit aufweisen. Der Basisbereich des Rahmens ist dabei vorzugsweise definiert durch eine Anzahl von Längs- und Querprofilen, welche derart angeordnet sind, dass sich der Basisbereich im Wesentlichen in einer Ebene erstreckt bzw. eben ausgebildet ist. An diesem Basisbereich sind zumindest drei Aufnahmeeinheiten mittelbar oder unmittelbar festgelegt und voneinander derart beabstandet, dass durch die drei Aufnahmeeinheiten drei Befestigungspunkte zur Festlegung zumindest einer, vorzugsweise zweier Transporteinheiten definiert sind. Weiterhin ist am Basisbereich zumindest ein Wagenrad, vorzugsweise zumindest zwei Wagenräder und insbesondere bevorzugt vier Wagenräder festlegbar. Zwei dieser Wagenräder, vorzugsweise die Hinterräder eines mit dem erfindungsgemäßen ausgestatteten Kinderwagens, sind dabei drehbar um eine Rotationsachse am Rahmen festgelegt. Die Aufnahmeeinheiten weisen dabei jeweils einen Schwenkteil auf, welcher relativ zum Basisbereich schwenkbar ist. In der jeweils ersten Stellung dieser Schwenkteile sind die Aufnahmeeinheiten dafür ausgelegt eine Transporteinheit am Rahmen festzulegen. In der zweiten Stellung sind die Aufnahmeeinheiten derart ausgelegt, dass sie einen möglichst geringen Bauraum beanspruchen, sodass gemeinsam mit anderen Schwenk- und Klappmechanismen am Rahmen des Kinderwagens ein zusammengefalteter Zustand des Rahmens erreicht wird, in welchem der Rahmen ein besonders geringen Volumen aufspannt und somit einfach transportiert oder verstaut werden kann. Die erste Stellung ist somit im Rahmen dieser Erfindung als die Betriebsstellung des Rahmens definiert, in welcher der Rahmen Transporteinheiten abstützen kann, die zweite Stellung ist im Rahmen der Erfindung als die Stellung der Aufnahmeeinheiten definiert, in welcher der Rahmen zusammengefaltet ist, um verstaut zu werden. Das Merkmal, wonach die Aufnahmeeinheiten in der ersten Stellung vom Basisbereich aus, vertikal nach oben ragen, bedeutet im Rahmen der vorliegenden Erfindung insbesondere, dass die Aufnahmeeinheiten eine Haupterstreckung, das heißt eine größte Erstreckung aufweisen sollen, welche im Wesentlichen quer oder senkrecht zu der von dem Basisbereich aufgespannten Ebene verläuft. Im Gegensatz hierzu ist die zweite Stellung dadurch definiert, dass die Aufnahmeeinheiten eine Erstreckung aufweisen sollen, welche annähernd oder im Wesentlichen parallel zu der vom Basisbereich aufgespannten Ebene verläuft. In der ersten Stellung erreichen die Aufnahmeeinheiten somit eine Beabstandung der daran festgelegten Transporteinheit(en) vom Boden, auf dem der Rahmen steht. In der zweiten Stellung erstrecken sich die Aufnahmeeinheiten möglichst wenig aus der durch den Basisbereich aufgespannten Ebene heraus, so dass ein geringes Packmaß erreicht wird.

Bevorzugt weist der Basisbereich zumindest zwei Längsprofile und zumindest drei Querprofile auf, wobei sich die Längsprofile quer zur Rotationsachse erstrecken, wobei sich die Querprofile im Wesentlichen parallel zur Rotationsachse erstrecken, wobei das zweite Querprofil zwischen dem ersten Querprofil und dem dritten Querprofil angeordnet ist, und wobei die zweite Aufnahmeeinheit am zweiten Querprofil festlegbar oder festgelegt ist. Um eine stabile und dennoch kompakte und einfach herzustellende Konstruktion zu ermöglich, weist der Basisbereich zwei Längsprofile und drei Querprofile auf. Zur Erhöhung der Stabilität können auch weitere Querprofile vorgesehen sein, insbesondere ein benachbart zum zweiten Querprofil angeordnetes viertes Querprofil. Die Längsprofile und Querprofile sind dabei mit Vorteil als Aluminiumprofile ausgebildet, vorzugsweise mit wesentlichen hohlkörperförmigen Querschnitt. Solche Profile lassen sich leicht, schnell und kostengünstig mittels Extrusionsverfahren herstellen und weisen bei geringem Gewicht eine hohe Stabilität, insbesondere ein hohes Flächenträgheitsmoment auf. Das zweite Querprofil, welches zwischen dem ersten und dem dritten Querprofil am ersten und zweiten Längsprofil festgelegt ist, dient insbesondere der Festlegung und Lagerung der zweiten Aufnahmeeinheit. Mit Vorteil sind die Längsprofile und die Querprofile dabei über Verbindungselemente, vorzugsweise aus Kunststoff oder faserverstärktem Kunststoff aneinander festgelegt. Dies erleichtert zum einen die Montage des Basisbereiches und somit des Rahmens, zum anderen sind solche Bauteile günstig herzustellen und können insbesondere auf die zu erwartenden Belastungen optimiert ausgelegt werden.

Mit Vorteil ist die erste Aufnahmeeinheit am ersten Längsprofil auf Höhe von oder benachbart zum zweiten Querprofil festlegbar oder festgelegt, wobei die dritte Aufnahmeeinheit am zweiten Längsprofil auf Höhe von oder benachbart zum zweiten Querprofil festlegbar oder festgelegt ist. Die erste und die dritte Aufnahmeeinheit sind somit bevorzugt, jeweils auf Höhe des zweiten Querprofiles und somit auch auf Höhe der zweiten Aufnahmeeinheit angeordnet und festgelegt. Mit Vorteil können hierbei insbesondere an der ersten und an der dritten Aufnahmeeinheit hohlkörperförmige Bereiche vorgesehen sein, welche sowohl das jeweilige Längsprofil als auch das zweite Querprofil umfassen und somit den Verbindungsbereich zwischen dem jeweiligen Längsprofil und dem zweiten Querprofil verstärken. Dies vereinfacht zum einen die Montage des Basisbereiches und zum anderen wird hierdurch die Festigkeit der Verbindung der Aufnahmeeinheiten mit dem Basisbereich erhöht.

Mit Vorteil weist die erste Aufnahmeeinheit einen ersten Fußteil auf, welcher am ersten Längsprofil und bevorzugt am zweiten Querprofil festgelegt ist, wobei der erste Schwenkteil in einem ersten Gelenk schwenkbar am ersten Fußteil festgelegt, bzw. gelagert ist, wobei die zweite Aufnahmeeinheit einen zweiten Fußteil aufweist, welcher am zweiten Querprofil, vorzugsweise mittig zwischen den Längsprofilen festgelegt ist, wobei der zweite Schwenkteil in einem zweiten Gelenk schwenkbar am zweiten Fußteil festgelegt, bzw. gelagert ist, wobei die dritte Aufnahmeeinheit einen dritten Fußteil aufweist, welcher am zweiten Längsprofil und bevorzugt am zweiten Querprofil festgelegt ist, wobei der dritte Schwenkteil in einem dritten Gelenk schwenkbar am dritten Fußteil festgelegt, bzw. gelagert ist. Mit Vorteil weisen somit die Aufnahmeeinheiten jeweils einen Fußteil auf, welcher insbesondere fest am Basisbereich festgelegt ist. Besonders bevorzugt ist hierfür ein formschlüssiger Eingriff mit der jeweiligen Geometrie des Basisbereiches, also am ersten Längsprofil, zweiten Längsprofil und/oder am zweiten Querprofil. Weiterhin bevorzugt können die Fußteile über Klemmmechanismen auch kraftschlüssig an der jeweiligen des Basisbereiches festgelegt sein oder zusätzlich durch eingebrachten Kleber auch stoffschlüssig festgelegt sein. Bevorzugt ist hierbei eine Kombination aus einem formschlüssigen und einem kraftschlüssigen Festlegen der Fußteile am Basisbereich. Zwischen dem jeweiligen Fußteil und dem jeweiligen Schwenkteil der jeweiligen Aufnahmeeinheit ist jeweils ein Gelenk, vorzugsweise ein Scharnier, vorgesehen und festgelegt, welches transversale Bewegung des Fußteiles zum jeweiligen Schwenkteil verhindert, aber eine Schwenkbewegung um eine definierte Schwenkachse erlaubt. Das erste und das dritte Gelenk sind mit Vorteil als Klavierband oder als entsprechendes Scharnier ausgebildet, da dies einfach herzustellen ist und eine hohe Festigkeit bei geringem Bauraumbedarf aufweist. Das zweite Gelenk verfügt mit Vorteil über einen Schwenkbolzen, welcher sich parallel zur Rotationsachse erstreckt. Weiterhin bevorzugt ist bei oder benachbart zu den Gelenken jeweils ein Rastmechanismus vorgesehen, welcher den jeweiligen Schwenkteil in der ersten Stellung relativ zum jeweiligen Fußteil sichert.

Weiterhin bevorzugt werden die Halteabschnitte in der ersten Stellung der Aufnahmeeinheiten jeweils mittig von einer parallel zur Rotationsachse verlaufenden Aufnahmeachse geschnitten. Diese geometrische Merkmal umschreib letztendlich, dass die Halteabschnitte vorzugsweise derart zueinander ausgerichtet und voneinander entfernt sind, dass eine Transporteinheit an zweien der Halteabschnitte festgelegt werden kann. Besonders bevorzugt lässt sich dabei eine durch die Aufnahmeachse verlaufende Aufnahmeebene definieren, in welcher jeweils die distalen Endflächen der Halteabschnitte liegen, wobei diese Endflächen, welche zu der jeweiligen Transporteinheit hinweisen, somit parallel zueinander ausgereichtet sind. Weiterhin bevorzugt ist es dank der Anordnung der Halteabschnitte auf einer gemeinsamen Linie nebeneinander möglich, die Transporteinheit(en) verdreht anzuordnen und an dem Rahmen festzulegen.

Weiterhin bevorzugt weisen die Halteabschnitte jeweils Eingriffsmittel, vorzugsweise Rücksprünge oder Vertiefungen, für den formschlüssigen Eingriff mit einer Transporteinheit auf. Bevorzugt handelt es sich hierbei um die Standardschnittstelle von Babyschalen, Sportsitzaufsätzen oder Autokindersitzen, welche mit einem einfachen Handgriff, insbesondere mit einer senkrecht zur der zuvor beschriebenen Aufnahmeebene verlaufenden Bewegung in die Halteabschnitte eingeschoben und eingerastet werden kann, wobei insbesondere bevorzugt ein in allen Raumrichtungen wirkender formschlüssiger Eingriff zwischen der Transporteinheit und dem jeweiligen Halteabschnitt hergestellt wird. Die Halteabschnitte sind mit Vorteil spiegelsymmetrisch zu einer Symmetrieebene ausgebildet, welche die Aufnahmeebene in der Aufnahmeachse senkrecht schneidet. Dies erlaubt die vorwärts- und rückwärtsgewandte Festlegung der Transporteinheit(en) an den Aufnahmeeinheiten.

In eine bevorzugten Ausführungsform ist oder sind die erste Aufnahmeeinheit und/oder die dritte Aufnahmeeinheit gekröpft ausgeführt, derart, dass in der ersten Stellung der jeweiligen Aufnahmeeinheit der jeweilige Halteabschnitt von einer Spurebene geschnitten wird, welche auch eines der Wagenräder senkrecht zur Rotationsachse schneidet. Dabei ist mit anderen Worten die Kröpfung derart vorgesehen, dass die Fußteile der ersten und der dritten Aufnahmeeinheit näher zueinanderstehen als die Halteabschnitte der ersten und der dritten Aufnahmeeinheit. Die Kröpfung der jeweiligen Aufnahmeeinheiten ist somit insbesondere derart vorgesehen, dass die Halteabschnitte am Rahmen weiter außen liegen, als die Fußteile. Mittels dieser Kröpfung lässt sich der am Kinderwagen vorhandene Bauraum zur Festlegung von Transporteinheiten optimal ausnutzen, wobei es bevorzugt ist, dass die maximale Breite des Rahmens im Bereich der Festlegung der Transporteinheiten die maximale Spurbreite, welche vorzugsweise an den Hinterrädern des Rahmens vorgesehen ist, nicht überschreitet, um ein seitliches Überkippen des Rahmens im beladenen Zustand zu vermeiden.

Hierbei ist es bevorzugt, dass der gekröpfte Anteil der ersten und/oder der dritten Aufnahmeeinheit jeweils im Schwenkteil vorgesehen ist. Mit Vorteil ist somit insbesondere nur der Schwenkteil der jeweiligen Aufnahmeeinheit gekröpft ausgebildet, was dazu führt, dass nach Verschwenken der Schwenkteile in die zweite Stellung eine noch kompaktere Ausbildung des zusammengeklappten Rahmens in der zweiten Stellung erreicht werden kann.

Mit Vorteil ist der zweite Schwenkteil um eine parallel zur Rotationsachse verlaufende Schwenkachse schwenkbar, um von der ersten Stellung in die zweite Stellung zu gelangen. Der zweite Schwenkteil, welcher an der zweiten Aufnahmeeinheit vorgesehen ist, schwenkt somit vorzugsweise in eine andere Richtung als der erste Schwenkteil und der dritte Schwenkteil. Dies ist bevorzugt, um beim Zusammenklappen des Rahmens zunächst den zweiten Schwenkteil um eine Parallele zur Rotationsachse, vorzugsweise nach vorn zu schwenken, um anschließend den ersten und den dritten Schwenkteil aufeinander zu, in dem Bereich zu schwenken, in welchem sich der zweite Schwenkteil in der ersten Stellung befindet.

Entsprechend bevorzugt ist der erste Schwenkteil um eine Schwenkachse schwenkbar, welche parallel zur Haupterstreckungsrichtung des ersten Längsprofiles im Bereich der ersten Aufnahmeeinheit verläuft, um von der ersten Stellung in die zweite Stellung zu gelangen und es ist bevorzugt, dass der dritte Schwenkteil um eine Schwenkachse schwenkbar ist, welche parallel zur Haupterstreckungsrichtung des zweiten Längsprofiles im Bereich der dritten Aufnahmeeinheit verläuft, um von der ersten Stellung in die zweite Stellung zu gelangen. Um eine besonders stabile Konstruktion zu gewährleisten, sind der erste und der dritte Schwenkteil vorzugsweise um jeweils Schwenkachsen schwenkbar, welche im Wesentlichen parallel zum Verlauf des Längsprofiles auf Höhe der Festlegung der jeweiligen Aufnahmeeinheit an dem Längsprofil verlaufen. Gleichzeitig wird hierdurch die Konstruktion des Fußteils der jeweiligen Aufnahmeeinheit vereinfacht, da dieser keine Kröpfung oder eine anderweitig von einer ebenen Ausbildung abweisende Geometrie aufweist und somit auf hohe Festigkeit der Festlegung am Basisbereich optimiert sein kann. Die Schwenkachsen des ersten und des dritten Schwenkteils schließen dabei mit Vorteil einen Winkel von 10° - 40° miteinander ein, wodurch beim Umklappen der jeweiligen Aufnahmeeinheit in die zweite Stellung, diese jeweils leicht schräg nach hinten schwenkt. Somit wird im zusammengeklappten Zustand des Rahmens der zwischen den Längsprofilen definierte Freiraum noch besser ausgenutzt. Indem gleichzeitig der zweite Schwenkteil bezogen auf den Rahmen nach vorn schwenkt, gelangt dieser aus dem Bereich heraus, in welchem der erste und der dritte Schwenkteil in der zweiten Stellung zu liegen kommen.

Mit Vorteil schwenken der erste Schwenkteil und der dritte Schwenkteil im Wesentlichen aufeinander zu, um von der ersten in die zweite Stellung zu gelangen.

Mit Vorteil weist die zweite Aufnahmeeinheit zwei Halteabschnitte auf, die entlang einer Parallelen zur Rotationsachse zueinander versetzt angeordnet sind, wobei in der ersten Stellung der Abstand des einen zweiten Haltabschnitts vom ersten Halteabschnitt vorzugsweise derselbe ist, wie der Abstand des anderen zweiten Halteabschnitts vom dritten Halteabschnitt. Die zweite Aufnahmeeinheit ist somit dafür ausgelegt, zwei Transporteinheiten zumindest auf deren jeweils innen liegenden Seite abzustützen. Dabei wird die erste Transporteinheit vorzugsweise durch die erste Aufnahmeeinheit und die zweite Aufnahmeeinheit abgestützt und die zweite Transporteinheit vorzugsweise durch die zweite Aufnahmeeinheit und die dritte Aufnahmeeinheit. Hierfür weist die zweite Aufnahmeeinheit vorzugsweise zwei im Wesentlichen parallel zueinander ausgerichtete zweite Halteabschnitte auf. Um die Stabilität der zweiten Aufnahmeeinheit zu erhöhen ist diese mit Vorteil einstückig ausgebildet, wobei die beiden Halteabschnitte in ein und demselben Grundkörper der zweiten Aufnahmeeinheit eingebracht oder an diesem ausgebildet sind.

Weiterhin bevorzugt sind zwei Wagenräder an gegenüberliegenden Seiten des Basisbereiches, vorzugsweise auf Höhe des dritten Querprofils, jeweils drehbar um die gemeinsame Rotationsachse festlegbar. Die Wagenräder sind somit vorzugsweise die Hinterräder des Rahmens bzw. des mit dem Rahmen ausgestatteten Kinderwagens. Diese Hinterräder sind mit Vorteil nicht lenkbar ausgerichtet, sondern insbesondere dafür ausgelegt, den Hauptteil des Gewichtes des Rahmens und der daran festgelegten Transporteinheiten aufzunehmen. Weiterhin bevorzugt sind an dem dritten Querprofil mit Vorteil Verbindungselemente zur Festlegung einer Handgriffeinheit vorgesehen, wobei die Handgriffeinheit derart an dem Basisbereich festgelegt ist, dass der Rahmen und der damit ausgestattete Kinderwagen über die Handgriffeinheit geschoben, und gedreht werden kann. Die Handgriffeinheit weist in bekannter Weise eine Reihe von Gelenkelementen auf, welche eine optimale Einstellung des Handgriffes der Handgriffeinheit auf die Größe des Anwenders des Rahmens des Kinderwagens erlaubt.

Weiterhin bevorzugt spannen die Längsprofile mit dem ersten und dem dritten Querprofil ein Trapez auf, wobei das erste Querprofil eine geringere Erstreckung parallel zur Rotationsachse aufweist als das dritte Querprofil. Auf Höhe des ersten Querprofiles werden vorzugsweise die Vorderräder des Kinderwagens am Basisbereich des Rahmens schwenkbar festgelegt. Es hat sich vorteilhaft erwiesen, dass dieser Bereich des Rahmens schmaler ausgebildet ist, also eine geringere Breite aufweist als der Bereich des Rahmens des Kinderrahmens, an welchem die Hinterräder festgelegt sind. Daher, zum einen zur Gewichtsersparnis, und zum anderen zur Erhöhung der Wendigkeit des Kinderwagens, weist der Rahmen einen Basisbereich auf, welcher im Wesentlichen trapezförmig ausgebildet ist.

Weiterhin bevorzugt ist in der ersten Stellung der Aufnahmeeinheiten die Erstreckung des jeweiligen Schwenkteils, im Wesentlichen senkrecht zu der durch den Basisbereich aufgespannten Basisebene ein 1,5- bis 3-faches der Erstreckung des jeweiligen Fußteiles der jeweiligen Aufnahmeeinheit senkrecht zu der Basisebene. Mittels dieses Größenverhältnisses zwischen dem schwenkbaren Teil der Aufnahmeeinheit und dem nicht schwenkbaren Teil, ist es insbesondere möglich, eine besonders kompakte zweite Stellung der Aufnahmeeinheiten zu erreichen. In dem der Großteil der Aufnahmeeinheiten verschwenkt werden kann, um in der zweiten Stellung weniger Platz wegzunehmen, lässt sich insgesamt ein besonders kompakter zusammengefalteter Rahmen erreichen. Gleichzeitig ist es möglich, dass die Aufnahmeeinheiten in ihrer jeweils ersten Stellung einen ausreichenden Abstand der Transporteinheiten vom Grund erlauben, insbesondere um unterhalb der Transporteinheiten weiteren Raum für die Aufbewahrung und den Transport von Gepäck, bspw. in Transportnetzen, bereitzustellen.

Weitere Vorteile und Merkmale der vorliegenden Erfindung ergeben sich aus der nachfolgenden Beschreibung mit Bezug auf die beigefügten Figuren. Es zeigen:
- Fig. 1: eine perspektivische Ansicht einer bevorzugten Ausführungsform des erfindungsgemäßen Rahmens für einen Kinderwagen,
- Fig. 2: eine Draufsicht auf den in Fig. 1 gezeigten Rahmen,
- Fig. 3: eine Ansicht eines Ausschnitts, des in Fig. 1 gezeigten Rahmens von hinten gesehen,
- Fig. 4: eine Detailansicht des in Fig. 2 dargestellten Rahmens,
- Fig. 5: eine Draufsicht auf eine erfindungsgemäße Ausführungsform des Rahmens in der zweiten Stellung,
- Fig. 6: eine Seitenansicht einer erfindungsgemäßen Ausführungsform des Rahmens in der zweiten Stellung,
- Fig. 7: eine Detailansicht einer bevorzugten Ausführungsform der zweiten Aufnahmeeinheit, und
- Fig. 8: eine Seitenansicht einer bevorzugten Ausführungsform des Rahmens mit daran festgelegter Transporteinheit.

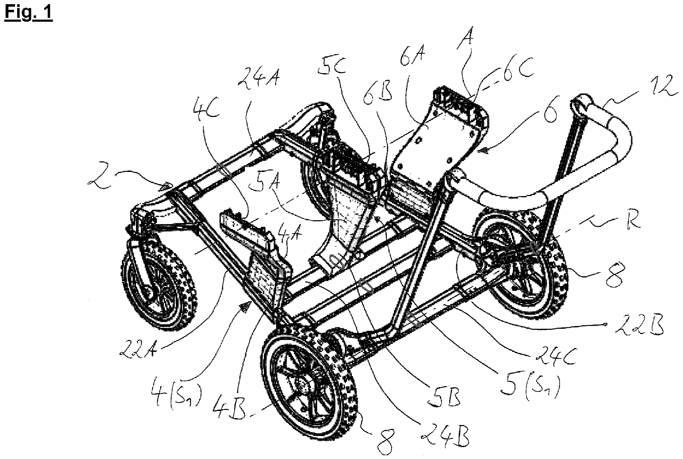

Der in Fig. 1 gezeigte Rahmen weist einen Basisbereich 2 auf, welcher neben einen bevorzugten ersten Querprofil 24A, einem zweiten Querprofil 24B und einem dritten Querprofil 24C auch noch ein viertes Querprofil ohne Bezugszeichen aufweist, welches der zusätzlichen Stabilisierung des Rahmens dient. Die Querprofile erstrecken sich jeweils zwischen zwei Längsprofilen 22A, 22B, wobei der Basisbereich 2 insgesamt eine trapezförmige Geometrie aufspannt und es sich im Wesentlichen innerhalb einer Basisebene B erstreckt. Auf Höhe des zweiten Querprofils 24B sind drei Aufnahmeeinheiten 4, 5, 6 am Basisbereich 2 des Rahmens festgelegt. Eine erste Aufnahmeeinheit 4 ist dabei am ersten Längsprofil 22A sowie am zweiten Querprofil 24B festgelegt. Eine zweite Aufnahmeeinheit 5 ist dabei lediglich am zweiten Querprofil 24B festgelegt. Eine dritte Aufnahmeeinheit 6 ist dabei sowohl am zweiten Längsprofil 22B als auch zweiten Querprofil 24B festgelegt. Die Aufnahmeeinheiten 4, 5, 6 weisen jeweils ein Fußteil 4B, 5B, 6B auf, an welchem schwenkbar jeweils ein Schwenkteil 4A, 5A, 6A festgelegt ist. Der erste Schwenkteil 4A und der dritte Schwenkteil 6A schwenken dabei jeweils um Schwenkachsen, welche sich im Wesentlichen parallel zu der Erstreckungsrichtung der Längsprofile 22A, 22B erstrecken. Der zweite Schwenkteil 5A schwenkt dabei um eine Schwenkachse, welche parallel zu der Rotationsachse (R) verläuft, um welche die Wagenräder 8 am Basisbereich 2 des Rahmens festgelegt sind. Weiterhin ist gezeigt, dass auf Höhe des dritten Querprofiles 24C eine Handgriffeinheit 12 am Rahmen festgelegt ist.

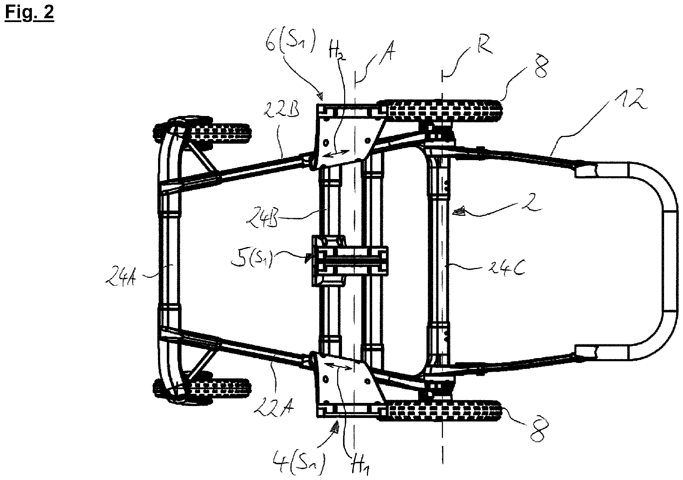

Fig. 2 zeigt eine Draufsicht auf die in Fig. 1 gezeigte Ausführungsform des Rahmens mit daran befestigten Wagenrädern 8. Es ist in dieser Ansicht insbesondere die trapezförmige Fläche erkennbar, welche von den beiden Längsprofilen 22A und 22B, sowie dem ersten und dem dritten Querprofil 24A, 24C aufgespannt wird. Im Bereich des ersten Fußteils 4B und des dritten Fußteils 6B ist die jeweilige Haupterstreckungsrichtung H₁, H₂ des jeweiligen Längsprofils 22A, 22B im Bereich der Festlegung der ersten und dritten Aufnahmeeinheit 4, 6 dargestellt. Die trapezförmige Form erleichtert es einerseits, die Vorderräder des Rahmens mit großem Freiheitsgrad schwenkbar um vertikale Achsen an der schmaleren Vorderseite des Rahmens aufhängen zu können. Andererseits erlaubt die breite Hinterseite des Rahmens auf Höhe des dritten Querprofils 24C einen sicheren Stand des Rahmens und eine optimierte Kraftübertragung von der Radaufhängung der hinteren Wagenräder 8 an den Rahmen 2 und insbesondere an die Aufnahmeeinheiten 4, 5, 6. Mit Vorteil überragt das erste Querprofil 24A die Anbindungspunkte mit dem ersten und dem zweiten Längsprofil 22A, 22A seitlich, bzw. längs einer parallel zur Rotationsachse R verlaufenden Richtung. An den distalen Enden dieser abstehenden Abschnitte des ersten Querprofils 24A ist je ein Vorderrad des Rahmens schwenkbar festgelegt. Mit Vorteil sind die Halteabschnitte 4C, 5C und 6C identisch ausgebildet, was eine Festlegung von verschiedensten Transporteinheiten mit vereinheitlichter Schnittstelle zur Festlegung und in beliebigen Einbaulagen ermöglicht.

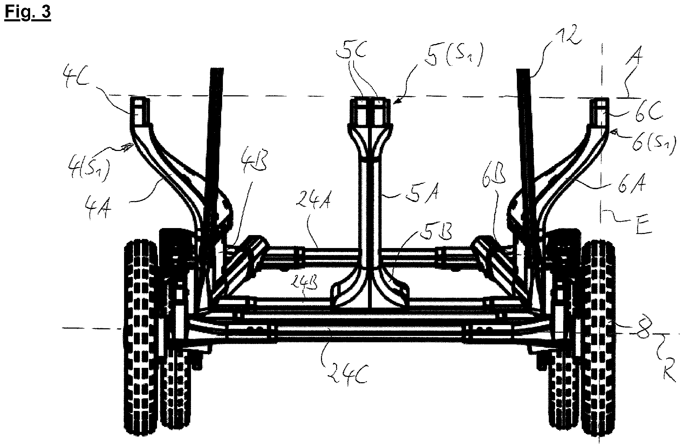

Fig. 3 zeigt eine Ansicht der bevorzugten Ausführungsform des Rahmens für einen Kinderwagen von der Hinterseite aus gesehen, wobei sich die Aufnahmeeinheiten 4, 5, 6 in der ersten Stellung S₁ befinden. Erkennbar ist die bevorzugte, stabile Ausbildung des zweiten Fußteils 5B an der zweiten Aufnahmeeinheit 5, welcher im Bereich seiner Anbindung an das zweite Querprofil 24B einen verbreiterten Querschnitt aufweist. Der Übergang zur größeren Breite des zweiten Fußteils 5B ist dabei fließend, um eine besonders materialschonende Kraftübertragung vom zweiten Halteabschnitt 5C in das zweite Querprofil 24B mit minimaler Kerbwirkung zu erlauben. Die zweite Aufnahmeeinheit 5 weist an ihrer Oberseite mit Vorteil zwei Halteabschnitte 5C auf, wodurch jeweils die zur Rahmenmitte zeigende Seite von zwei Transporteinheiten 10 an der zweiten Aufnahmeeinheit 5 festlegbar ist. Weiterhin ist die gekröpfte Ausbildung des ersten und des dritten Schwenkteils 4A, 6A erkennbar. An der in der Figur rechts gezeigten dritten Aufnahmeeinheit 6 ist die Lage der Spurebene E verdeutlicht, welche sowohl das Fahrzeugrad 8 als auch den dritten Halteabschnitt 6C mittig schneidet. Der Abstand des ersten Halteschnitts 4C vom dritten Halteabschnitt 6C entspricht somit im Wesentlichen dem Abstand der beiden hinteren Wagenräder 8 voneinander, welcher mit anderen Worten die maximale Spurbreite des Rahmens und dem hiermit ausgestatteten Kinderwagen definiert.

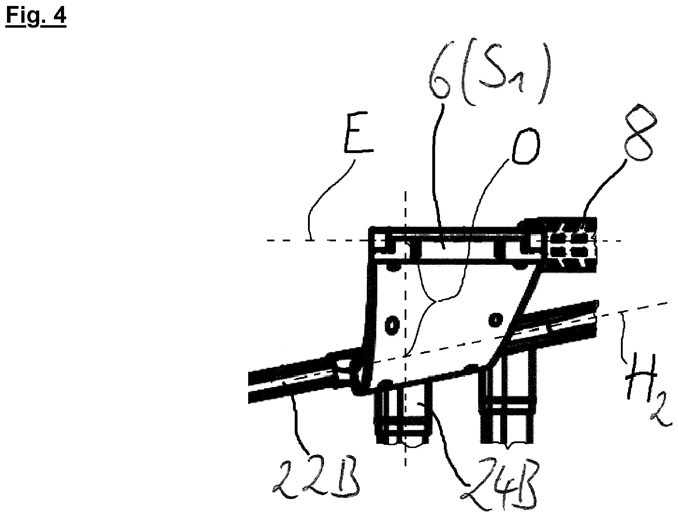

Fig. 4 zeigt eine Detailansicht der in Fig. 2 gezeigten Darstellung einer bevorzugten Ausführungsform des Rahmens im Bereich der dritten Aufnahmeeinheit 6. Bevorzugt ist die dritte Aufnahmeeinheit 6, insbesondere bevorzugt der dritte Schwenkteil 6A, derart gekröpft ausgebildet, dass der dritte Halteabschnitt 6C mit einem entlang einer parallel zur Rotationsachse R gemessenen Offset O zur Mitte des Befestigungsbereiches des dritten Fußteils 6B an dem zweiten Querprofil 24B beabstandet ist. Weiterhin weist der dritte Schwenkteil 6A mit Vorteil eine von seiner schwenkbaren Aufhängung am dritten Fußteil 3B bis zum dritten Halteabschnitt 6C verlaufende Krümmung auf, die dafür sorgt, dass in der Draufsicht gesehen, die in der Spurebene E liegende Mittelachse des dritten Halteabschnitts 6C und die Haupterstreckungsrichtung H₂ des zweiten Längsprofils 22A einen Winkel einschließen, welcher vorzugsweise zwischen 5° und 20° und besonders bevorzugt bei ca. 8° bis 15° liegt. Mittels dieser vorteilhaften Ausbildung, ist der dritte Halteabschnitt 6C in Rahmenlängsrichtung und parallel zur Spurachse E ausgerichtet. Es versteht sich, dass die hier für die dritte Aufnahmeeinheit beschriebenen geometrischen Merkmale analog auch für die erste Aufnahmeeinheit 4 bevorzugt sind. Mit anderen Worten ist der in Fig. 2 dargestellte Rahmen spiegelsymmetrisch um eine Längsmittelebene des Rahmens ausgebildet.

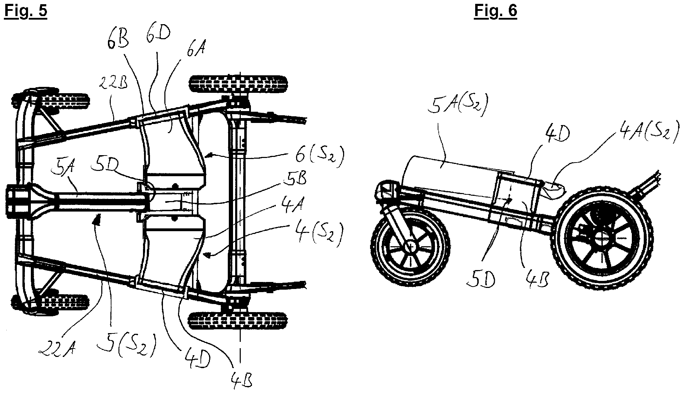

Fig. 5 und Fig. 6 zeigen zwei Ansichten des Rahmens in der zweiten Stellung S₂. Dabei sind der erste und der dritte Schwenkteil 4A und 6A nach innen geschwenkt, bzw. umgelegt. Der zweite Schwenkteil 5A ist um das zweite Gelenk 5D nach vorn geschwenkt. Wie insbesondere aus Fig. 6 zu erkennen, ist Vergleich zur ersten Stellung S₁ hierbei die Gesamthöhe des Rahmens deutlich reduziert. Zu Reduzierung der Gesamthöhe trägt weiterhin bei, dass die Fußteile 4B, 5B, 6B eine wesentlich geringere Erstreckung in vertikaler Richtung aufweisen, als die Schwenkteile 4A, 5A, 6A in deren erster Stellung.

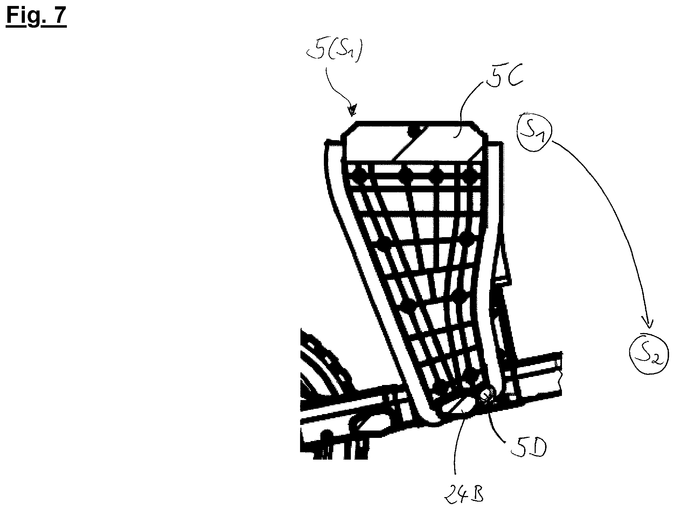

Fig. 7 zeigt eine Detailansicht der zweiten Aufnahmeeinheit 5, wobei insbesondere die Schwenkbewegung gekennzeichnet ist, um den zweiten Schwenkteil 5A von der ersten Stellung S₁ in die zweite Stellung S₂ zu schwenken. Das zweite Gelenk 5D ist dabei mit Vorteil an der nach vorn (in der Figur nach rechts) weisenden Seite des zweiten Fußteils 5B angeordnet.

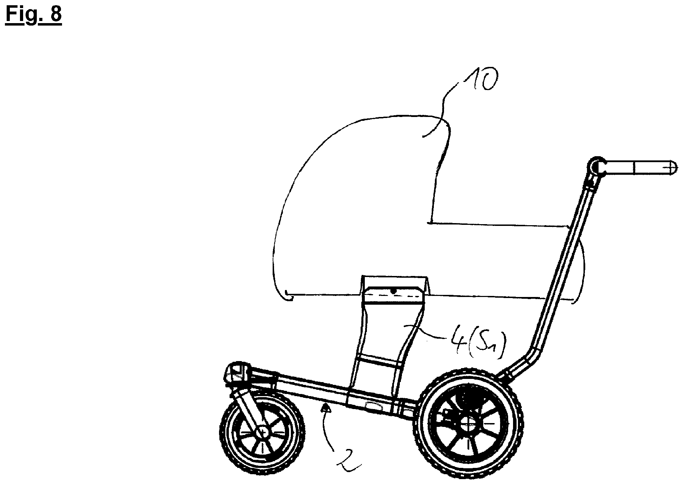

Fig. 8 schließlich zeigt eine Seitenansicht eines Kinderwagens mit einer Ausführungsform des erfindungsgemäßen Rahmens und einer daran festgelegten Transporteinheit 10. Mit Vorteil sind zwei Transporteinheiten 10 am Rahmen festgelegt, wobei die vom Betrachter abgewandte Transporteinheit 10 verdeckt ist.

**Bezugszeichen:**

| | | | |
|---|---|---|---|
| 2 | - Basisbereich | 6 | - dritte Aufnahmeeinheit |
| 22A | - erstes Längsprofil | 6A | - dritter Schwenkteil |
| 22B | - zweites Längsprofil | 6B | - dritter Fußteil |
| 24A | - erstes Querprofil | 6C | - dritter Halteabschnitt |
| 24B | - zweites Querprofil | 6D | - drittes Gelenk |
| 24C | - drittes Querprofil | 8 | - Wagenrad |
| 4 | - erste Aufnahmeeinheit | 10 | - Transporteinheit |
| 4A | - erster Schwenkteil | 12 | - Handgriffeinheit |
| 4B | - erster Fußteil | A | - Aufnahmeachse |
| 4C | - erster Halteabschnitt | E | - Spurebene |
| 4D | - erstes Gelenk | H₁ | - Haupterstreckungsrichtung |
| 5 | - zweite Aufnahmeeinheit | H₂ | - Haupterstreckungsrichtung |
| 5A | - zweiter Schwenkteil | O | - Offset |
| 5B | - zweiter Fußteil | R | - Rotationsachse |
| 5C | - zweiter Halteabschnitt | S₁ | - erste Stellung |
| 5D | - zweites Gelenk | S₂ | - zweite Stellung |

## Patentansprüche

1. Rahmen zum Einsatz an einem Kinderwagen, umfassend einen Basisbereich (2) und zumindest drei Aufnahmeeinheiten (4, 5, 6),
wobei am Basisbereich (2) zumindest ein Wagenrad (8) drehbar um eine Rotationsachse (R) festlegbar ist,
wobei die Aufnahmeeinheiten (4, 5, 6) mittelbar oder unmittelbar am Basisbereich (2) festgelegt sind und jeweils einen Schwenkteil (4A, 5A, 6A) aufweisen, welcher relativ zum Basisbereich (2) schwenkbar ist und in eine erste Stellung (S₁) oder in eine zweite Stellung (S₂) bringbar ist,
wobei die Aufnahmeeinheiten (4, 5, 6) in einer ersten Stellung (S₁) vom Basisbereich (2) aus in vertikaler Richtung nach oben ragen,
wobei die Aufnahmeeinheiten (4, 5, 6) an ihrem in der ersten Stellung (S₁) vom Basisbereich (2) abgewandten, distalen Ende jeweils zumindest einen Halteabschnitt (4A, 5A, 6A) zur Festlegung zumindest einer Transporteinheit (10) aufweisen.

2. Rahmen nach Anspruch 1,
wobei der Basisbereich (2) zumindest zwei Längsprofile (22A, 22B) und zumindest drei Querprofile (24A, 24B, 24C) aufweist,
wobei sich die Längsprofile (22A, 22B) quer zur Rotationsachse (R) erstrecken,
wobei sich die Querprofile (24A, 24B, 24C) im Wesentlichen parallel zur Rotationsachse (R) erstrecken,
wobei das zweite Querprofil (24B) zwischen dem ersten Querprofil (24A) und dem dritten Querprofil (24C) angeordnet ist, und
wobei die zweite Aufnahmeeinheit (5) am zweiten Querprofil (24B) festlegbar oder festgelegt ist.

3. Rahmen nach Anspruch 2,
wobei die erste Aufnahmeeinheit (4) am ersten Längsprofil (22A) auf Höhe von oder benachbart zum zweiten Querprofil (24B) festlegbar oder festgelegt ist, und
wobei die dritte Aufnahmeeinheit (6) am zweiten Längsprofil (22B) auf Höhe von oder benachbart zum zweiten Querprofil (24B) festlegbar oder festgelegt ist.

4. Rahmen nach einem der vorhergehenden Ansprüche,
wobei die erste Aufnahmeeinheit (4) einen ersten Fußteil (4B) aufweist, welcher am ersten Längsprofil (22A) und bevorzugt am zweiten Querprofil (24B) festgelegt ist, wobei der erste Schwenkteil (4A) in einem ersten Gelenk (4D) schwenkbar am ersten Fußteil (4B) festgelegt ist,
wobei die zweite Aufnahmeeinheit (5) einen zweiten Fußteil (5B) aufweist, welcher am zweiten Querprofil (24B), vorzugsweise mittig zwischen den Längsprofilen (22A, 22B) festgelegt ist, wobei der zweite Schwenkteil (5A) in einem zweiten Gelenk (5D) schwenkbar am zweiten Fußteil (5B) festgelegt ist,
wobei die dritte Aufnahmeeinheit (6) einen dritten Fußteil (6B) aufweist, welcher am zweiten Längsprofil (22B) und bevorzugt am zweiten Querprofil (24B) festgelegt ist, wobei der dritte Schwenkteil (6A) in einem dritten Gelenk (6D) schwenkbar am dritten Fußteil (6B) festgelegt ist.

5. Rahmen nach einem der vorhergehenden Ansprüche,
wobei die Halteabschnitte (4C, 5C, 6C) in der ersten Stellung (S₁) der Aufnahmeeinheiten (4, 5, 6) jeweils mittig von einer parallel zur Rotationsachse (R) stehenden Aufnahmeachse (A) geschnitten werden.

6. Rahmen nach einem der vorhergehenden Ansprüche,
wobei die Halteabschnitte (4C, 5C, 6C) jeweils Eingriffsmittel, vorzugsweise Rücksprünge oder Vertiefungen, für den formschlüssigen Eingriff mit einer Transporteinheit (10) aufweisen.

7. Rahmen nach einem der vorhergehenden Ansprüche,
wobei die erste Aufnahmeeinheit (4) und/oder die dritte Aufnahmeeinheit (6) gekröpft ausgeführt ist/sind, derart, dass in der ersten Stellung (S₁) der jeweiligen Aufnahmeeinheit (4, 6) der jeweilige Halteabschnitt (4C, 6C) von einer Spurebene (E) geschnitten wird, welche auch eines der Wagenräder (8) senkrecht zur Rotationsachse (R) schneidet.

8. Rahmen nach Anspruch 7,
wobei der gekröpfte Anteil der ersten und/oder der dritten Aufnahmeeinheit (4, 6) jeweils im Schwenkteil (4A, 6A) vorgesehen ist.

9. Rahmen nach einem der vorhergehenden Ansprüche, wobei der zweite Schwenkteil (5A) um eine parallel zur Rotationsachse (R) verlaufende Schwenkachse schwenkbar ist, um von der ersten Stellung (S₁) in die zweite Stellung (S₂) zu gelangen.

10. Rahmen nach einem der vorhergehenden Ansprüche,
wobei der erste Schwenkteil (4A) um eine Schwenkachse schwenkbar ist, welche parallel zur Haupterstreckungsrichtung (H₁) des ersten Längsprofils (22A) im Bereich der ersten Aufnahmeeinheit (4) verläuft, um von der ersten Stellung (S₁) in die zweite Stellung (S₂) zu gelangen, und
wobei der dritte Schwenkteil (6A) um eine Schwenkachse schwenkbar ist, welche parallel zur Haupterstreckungsrichtung (H₂) des zweiten Längsprofils (22B) im Bereich der dritten Aufnahmeeinheit (6) verläuft, um von der ersten Stellung (S₁) in die zweite Stellung (S₂) zu gelangen.

11. Rahmen nach Anspruch 10,
wobei der erste Schwenkteil (4A) und der dritte Schwenkteil (6A) im Wesentlichen aufeinander zu schwenken, um von der ersten Stellung (S₁) in die zweite Stellung (S₂) zu gelangen.

12. Rahmen nach einem der vorhergehenden Ansprüche,
wobei die zweite Aufnahmeeinheit (5) zwei zweite Halteabschnitte (5C) aufweist, die entlang einer Parallelen zur Rotationsachse (R) zueinander versetzt angeordnet sind,
wobei in der ersten Stellung (S₁) der Abstand des einen zweiten Halteabschnitts (5C) vom ersten Halteabschnitt (4C) vorzugsweise derselbe ist, wie der Abstand des anderen zweiten Halteabschnitts (5C) vom dritten Halteabschnitt (6C).

13. Rahmen nach einem der vorhergehenden Ansprüche,
wobei zwei Wagenräder (8) an gegenüberliegenden Seiten des Basisbereiches (2) jeweils drehbar um die gemeinsame Rotationsachse (R) festlegbar sind.

14. Rahmen nach einem der Ansprüche 2 bis 13,
wobei die Längsprofile (22A, 22B) mit dem ersten und dem dritten Querprofil (24A, 24C) ein Trapez aufspannen,
wobei das erste Querprofil (24A) eine geringere Erstreckung parallel zur Rotationsachse (R) aufweist, als das dritte Querprofil (24C).

15. Rahmen nach einem der vorhergehenden Ansprüche,
wobei in der ersten Stellung (S₁) der Aufnahmeeinheiten (4, 5, 6) die Erstreckung des jeweiligen Schwenkteils (4A, 5A, 6A), im Wesentlichen senkrecht zu der durch den Basisbereich (2) aufgespannten Basisebene ein 1,5- bis 3-faches der Erstreckung des jeweiligen Fußteiles (4B, 5B, 6B) der jeweiligen Aufnahmeeinheit (4, 5, 6) senkrecht zu der Basisebene ist.
